# EUROPEAN PATENT SPECIFICATION

(11) **EP 2 401 705 B1**
(45) Date of publication and mention of the grant of the patent: **12.03.2014**
(21) Application number: 10703375.5
(22) Date of filing: 26.01.2010
(51) Int. Cl.: G06K 7/00, G06K 17/00

(54) **RFID HARD TAG ENCODING SYSTEM AND METHOD**
RFID-HARTETIKETTENCODIERUNGSSYSTEM UND VERFAHREN
SYSTÈME ET PROCÉDÉ DE CODAGE D'ÉTIQUETTE RIGIDE RADIO

(30) Priority: 24.02.2009 US 391853
(43) Date of publication of application: 04.01.2012
(73) Proprietor: Tyco Fire & Security GmbH, 8212 Neuhausen am Rheinfall (CH)
(72) Inventor: ALEXIS, Mark, Wellington FL 33414 (US)
(74) Representative: Hafner, Dieter
(86) International application number: PCT/US2010/000218
(87) International publication number: WO 2010/098810

(56) References cited:
- EP-A2- 1 538 552
- WO-A1-2006/050407
- US-A- 6 104 291
- US-A- 6 131 744
- US-B1- 6 598 730

## Description

### FIELD OF THE INVENTION

The present invention relates generally to inventory security, and more specifically to a method and system for programming a security system "hard" tag.

### BACKGROUND OF THE INVENTION

Radio frequency identification ("RFID") systems are used in a wide variety of applications, and provide convenient mechanisms for the tracking, identification, and authentication of persons or objects. A RFID system typically includes one or more readers (also commonly referred to as interrogators) deployed at selected locations in an installation. Readers are typically deployed where it is desired to control or to receive information about objects or persons bearing or associated with RFID tags (also commonly referred to as markers or transponders). For example, readers may be deployed so as to cover entrances and exits, inventory control points, transaction terminals, and the like. Each reader is capable of receiving information from RFID tags with each tag typically being associated with an object or person. A tag may be affixed to or embedded in an object with which it is associated, or be part of a badge, card, or token given to a person. Signals conveyed between the tag and the reader, allow the reader to sense information on the tag. This information may include, for example, authentication or identification information, or may include instructions, such as a sequence of processes or operations to be conducted upon an object bearing the tag.

Each tag may include stored information that is communicated wirelessly to the reader. Tags typically carry information in onboard memory such as read only memory ("ROM") or nonvolatile programmable memory such as electrically erasable programmable read only memory ("EEPROM") and the amount of information may range from a single bit to kilobits or even more. Single bit tags typically serve as surveillance devices, such as theft prevention tags. Information amounting to a few bits or tens of bits may serve as an identifier, such as may be found in a badge or smart card, while information amounting to kilobits may comprise a portable data file that can be used for identification, communication, or control. The reader may, for example, extract information from a tag and use it for identification, or may store or convey the information to a responsible party. Alternatively, a data file may include a set of instructions that may initiate or control processes or actions without recourse to, or in coordination with, information stored elsewhere.

A tag typically includes a wireless communication device, for example a transmitter or transponder, which is capable of wirelessly communicating stored information to the reader. The tag may communicate the information independently or in response to a signal, such as an interrogation signal, received from the reader. Both active and passive tags are known in the art. An active tag has an onboard power source, while a passive tag may operate without an internal power source, deriving its operating power from a field generated by the reader. Passive tags are much lighter and less expensive than active tags and may offer a virtually unlimited operational lifetime. However, passive tags typically have shorter read ranges than active tags and require a higher powered reader. Passive tags are also constrained in their capacity to store data and their ability to perform well in electromagnetically noisy environments.

Some tags contain a combination of RFID and EAS technology and can support Electronic Product Code ("EPC"), a globally unique serial number that identifies an item in the supply chain. The EPC allows inquiries to be made about a single instance of an item, wherever it is within the supply chain. The EPC contains information about the manufacturer, the type of object and a specific serial for the object. The EPC can also be associated with dynamic data such as the origination point of an item or the date of its production.

Retail establishments typically use "hard tags" containing EAS elements or a combination of EAS and RFID elements. An advantage of these hard tags is that they can be reused and reprogrammed. In order to reuse these hard tags, they must be re-encoded with new EPC numbers when attached to a new product. This process may occur at a manufacturing site, distribution center, or at a retail store. However, unlike conventional RFID labels and hanging tags, these hard tags cannot be encoded in standard print/encode portable machines, like the ones found at department stores. Currently, the only way to reprogram the tag is to manually place the hard tag in front of a conventional reader/antenna to be reprogrammed, or using a mobile hand-held reader to encode. This is very time consuming and requires the target hard tag to be in isolation with no other tags nearby, given that there is a risk of unintentionally encoding other hard tags near the hard tag being encoded. The need to isolate the hard tag makes this method inconvenient and inefficient, as the user cannot just reprogram the hard tag by setting the encoder in front of a display rack containing products, including the product with the hard tag that needs to be reprogrammed. Instead, in order to reprogram the hard tag, the product with the hard tag must be set apart from all the other products which contain hard tags.

US 6,104,291 A discloses an apparatus for testing RFID tags. The RFID tags are transported on a carriage assembly to the antenna. The antenna is shielded by an RF shield.

WO 2006/050407 A1 shows an antenna for a combination EAS/RFID tag. The antenna reads the RFID tag and engages the detacher.

EP 1 538 552 A2 discloses a printing system capable of writing RFID data consistent with print information, to prevent the writing of data on the vicinity of the RFID writer a shield is provided.

US 6,598,730 B1 shows a parts feed device. The feeder has a vibrating platform for changing the orientation and/or the position of the parts shielded.

US 6,131,744 A teaches a system for recycling identification tags. The system comprises a vibratory aligner, that aligns the tags.

Therefore, what is needed is a system and method that automatically and efficiently reprograms a hard tag by isolating the tag so that the reprogramming does not interfere with other nearby tags.

### SUMMARY OF THE INVENTION

The invention is defined in independent claims 1 and 12.

In accordance with one aspect, the present invention provides a system for programming a hard tag in which the hard tag includes a programmable RFID element. The system has a platform defining at least one hard tag locating area. A feeder feeds the hard tag into one of the at least one hard tag locating areas. An antenna is positioned at a hard tag programming area. Each of the at least one hard tag locating areas are positionable within the hard tag programming area. A RFID processor causes the hard tag to be programmed by the antenna when the hard tag is positioned within the hard tag programming area.

In accordance with another aspect, the present invention provides a method for programming a hard tag in which the hard tag includes a programmable RFID element. The hard tag is received into at least one hard tag locating area. Each of the at least one hard tag locating areas is positioned within a hard tag programming area in which the hard tag programming area includes an antenna. The hard tag is programmed with a merchandise identifier when the hard tag is positioned within the hard tag programming area. In accordance with still another aspect, the present invention provides a system for programming an RFID element in a security hard tag in which the hard tag includes an EAS element and the RFID element. A platform defines at least one hard tag locating area. A feeder feeds the hard tag into one of the at least one hard tag locating areas. An antenna is positioned at a hard tag programming area in which the antenna is arranged to transmit a programming signal substantially within the hard tag programming area. Each of the at least one hard tag locating areas is positionable within the hard tag programming area. A RFID processor causes the antenna to program the programmable RFID element of the hard tag with an electronic product code ("EPC") when the hard tag is positioned within the hard tag programming area.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary RFID hard tag programming system constructed in accordance with the principles of the present invention;
FIG. 2 is a diagram of an exemplary embodiment of the system of FIG. 1 constructed in accordance with the principles of the present invention;
FIG. 3 is a diagram of another exemplary embodiment of the system of FIG. 1 constructed in accordance with the principles of the present invention; and
FIG. 4 is a flowchart of a RFID hard tag programming method in accordance with the principles of the present invention.

### DETAILED DESCRIPTION OF THE INVENTION

Before describing in detail exemplary embodiments that are in accordance with the present invention, it is noted that the embodiments reside primarily in combinations of apparatus components and processing steps related to implementing a system and method for programming an RFID element in an inventory security system hard tag. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

One embodiment of the present invention advantageously provides a system and method for programming a hard tag that includes a programmable RFID element. Programming a hard tag may be performed at any of several points, such as when stock is received, in inventory, before setting the merchandise on the shelves, etc., with minimal effort by using the hard tag programming system and method described below. The hard tag's EPC allows items to be tracked through the course of storage and when items are being moved to different stores or warehouses. The EPC may include several parts, such as a version number, a code identifying the manufacturer, the serial number of the product, etc. The programming system may program a complete new EPC or parts of an EPC.

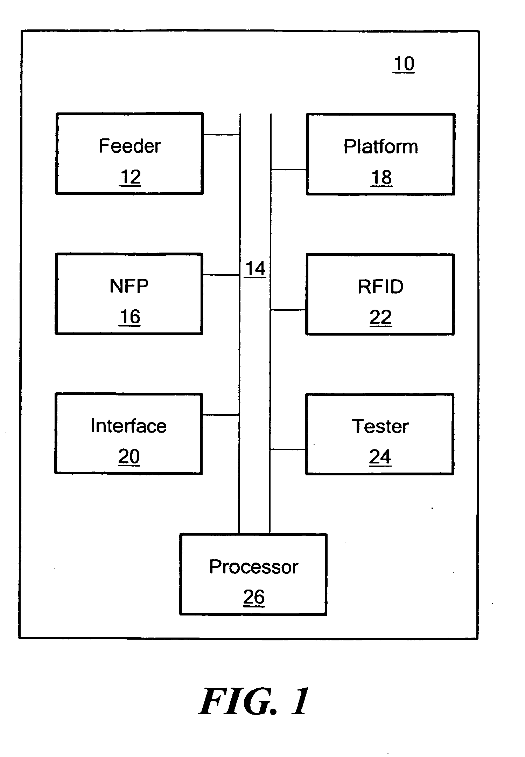

Referring now to the drawing figures in which like reference designators refer to like elements, there is shown in FIG. 1 a diagram of an exemplary tag programming system constructed in accordance with the principles of the present invention and designated generally as "10". Programming system 10 includes one or more hard tag feeders, such as feeder 12. Feeder 12 receives hard tags 40 to be programmed. In one embodiment, feeder 12 is connected to a communication infrastructure 14, e.g., a communications bus, cross-bar interconnect, network, etc. Communication infrastructure 14 electronically connects elements of the programming system 10 to each other.

Programming system 10 includes near field programming ("NFP") antenna 16 that can program text, and other data received from communication infrastructure 14 (or from a frame buffer not shown) into hard tag 40 using for example, EPC compliant communication. NFP antenna 16 programs hard tag 40 without programming any other nearby tags. Feeder 12 feeds hard tags 40 onto platform 18. The platform 18 can be a moving or a stationary platform that receives hard tag 40 to be programmed. Programming system 10 includes user interface 20 that forwards graphics, text, and other data from communication infrastructure 14 (or from a frame buffer not shown) for display on a display unit.

Interface 20 may also include a communications interface. Communications interface allows software and data to be transferred to external devices or to receive data from a user. Examples of communications interface may include a mouse, keyboard, a modem, a network interface (such as an Ethernet card), a communications port, a PCMCIA slot and card, wireless transceiver/antenna, etc. Software and data transferred via the communications interface/module are in the form of signals which may be, for example, electronic, electromagnetic, optical, or other signals capable of being received by the communications interface. These signals are provided to the communications interface via a communications link (i.e., channel), which carries signals and may be implemented using wire or cable, fiber optics, a phone line, a cellular phone link, an RF link, and/or other communications channels.

Programming system 10 includes RFID programming unit 22 that stores programming instructions and commands. RFID programming unit 22 can include a main memory, preferably random access memory ("RAM"), and may also include a secondary memory for such storage. The secondary memory may include, for example, a hard disk drive and/or a removable storage drive, representing a floppy disk drive, a magnetic tape drive, an optical disk drive, etc. The removable storage drive reads from and/or writes to a removable storage media in a manner well known to those having ordinary skill in the art. Removable storage media is read by and written to by removable storage drive. As will be appreciated, the removable storage media can include a computer usable storage medium having stored therein programming software and/or data. In one embodiment, the memory is a system wide memory shared by the elements of programming system 10, and it is not necessary to have the memory be included as part of RFID programming unit 22.

Executable computer programs (also called computer control logic) can be stored in the memory of RFID programming unit 22. Computer programs may also be received via communications infrastructure 14. Such computer programs, when executed, enable the system to perform the functions of the present invention as discussed herein. In alternative embodiments, the secondary memory may include other similar means for allowing computer programs or other instructions to be loaded into the computer system and for storing data. Such means may include, for example, a removable storage unit and an interface. Examples of such may include a program cartridge and cartridge interface (such as that found in video game devices), flash memory, a removable memory chip (such as an EPROM, EEPROM or PROM) and associated socket, and other removable storage units and interfaces which allow software and data to be transferred from the removable storage unit to other devices.

Programming system 10 also includes tester 24. Tester 24 allows programming system 10 to test whether hard tag 40 was programmed correctly. Tester 24 may use different methodologies to test whether the tag's programming was successful. In one embodiment, tester 24 rejects hard tag 40 that has been programmed incorrectly to prevent hard tag 40 from being attached to a product. As discussed below, tester 24 can include gating mechanism 34 that diverts rejected tags into reject bin 36.

Programming system 10 further includes processor 26. FIG. 1 shows a separate processor 26 controlling programming system 10, however, processor 26 can be part of RFID programming unit 22 and can be a RFID processor. In particular, computer programs, when executed, enable processor 26 to perform the functions of the corresponding programming system and method. Accordingly, such computer programs represent controllers of the corresponding device. In one embodiment, processor 26 has the ability to send and receive trigger signals (via digital I/O or serial interfaces) from an external mechanical system to enable automatic encoding of hard tags 40 in an automated production line.

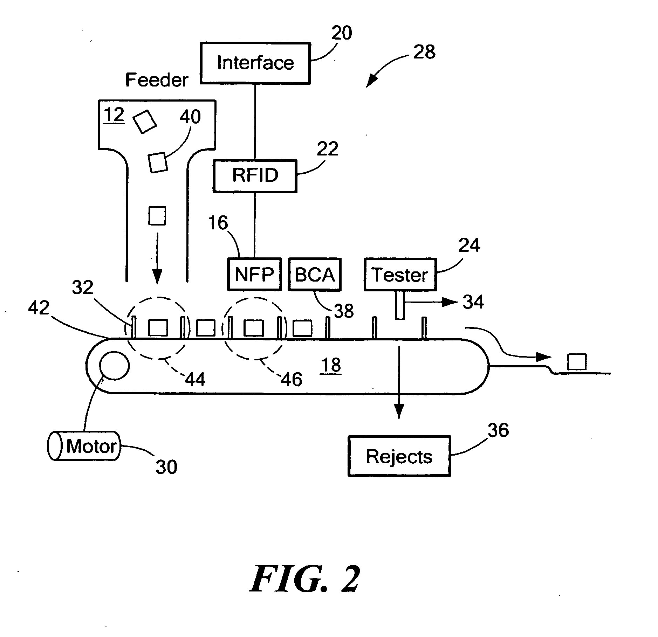

FIG. 2 is a diagram of an exemplary programming system 28 embodiment constructed in accordance with the principles of the present invention. In accordance with this embodiment, FIG. 2 shows feeder 12 feeding hard tags 40 onto hard tag locating area 44 of platform 18. A mechanism such as a vibratory feeder (not shown) can orient each hard tag 40 and place hard tag 40 in belt 42 or conveyor of platform 18. Platform 18 advances each tag to hard tag programming area 46, i.e. a programming station containing NFP antenna 16. In one embodiment, platform 18 is a moving platform set into motion by motor 30 controlled by processor 26 (FIG. 1). Platform 18 advances each hard tag locating area 44 to hard tag programming area 46 with a conveyor system coupled to platform 18.

Platform 18 includes a shielding system 32 to block RF energy, thereby preventing the NFP antenna 16 from inadvertently encoding adjacent tags. The shielding system 32 may use different methods to prevent the encoding of other tags, and as such, shielding system 32 may desensitize the areas outside the programming area or may create interference, thereby reducing the quality of wireless communications of the NFP antenna 16 with adjacent hard tags. Shielding system 32 may also separate the transmitted RF signals, or can provide a degree of isolation between hard tag programming area 46 and surrounding areas. Shielding system 32 provides isolation between the programmed hard tag 40 and adjacent tags by cancelling the whole or part of the RFID signal, by attenuating the signal, filtering the signal, reducing the amplitude of the signal, reducing the power of the signal, etc. Shielding system 32 may eliminate, cancel or minimize the RFID signal. Due to non-ideal circumstances, a portion of the transmit signal may leak or flow into the surrounding areas, but shielding system 32 ensures that the signal is not strong enough to reprogram adjacent hard tags.

NFP antenna 16 programs hard tag 40 with the desired EPC code or other standard RFID numbering scheme or identity. In another embodiment, separate NFP antennas 16 may be used in programming hard tags 40. Even when separate NFP antennas 16 are used to transmit RF signals, the RF signal broadcast via the NFP antenna 16 does not reprogram other adjacent hard tags. In one embodiment, programming system 28 has the ability to feed and encode a variety of hard tag shapes, designs and adapts to these designs automatically or by simple mechanical adjustments by the user.

Interface 20 can be a computer interface that receives commands, encoding information, serial numbers, etc. from a host system, a barcode scanning system or a user. Programming system 28 can receive both a single item number and a serial number range, giving programming system 28 the ability to encode a long series of identical items without intervention and without having to maintain a connection between, for example, computer interface 20 and an external host. In one embodiment, interface 20 emulates the interfaces of industry standard print/encode devices commonly used to program conventional RFID labels and tickets.

Interface 20 can allow programming system 28 to be updated, specifically, RFID reader/encoder programming unit 22 can be upgraded with new firmware to adapt to new RFID standards and improvements in technology. In one embodiment, interface 20 requires a password or a security look in order to prevent unauthorized encoding of hard tags 40. In one embodiment, interface 20 shows a visible signal, or an audible signal to provide feedback to the user as to the data being programmed, serial statistics on the number of hard tags encoded, the number of hard tags that failed to encode, serial numbers issues, etc.

Tester 24 checks that hard tag 40 is properly programmed and exposes hard tag 40 programming errors. Tester 24 performs quality assurance on hard tag 40, finding mistakes, bugs and other problems that could arise in the programming phase. Tester 24 can be a low power tester, and might activate different combinations of read and write routines on hard tag 40 and analyze the outcome. The reading routine can simulate a portable scanner reading hard tag 40, just like the portable scanners used in department stores. Tester 24 can also perform comprehensive protocol and parametric tests in accordance with preset standards. Tester 24 can allow multiple configuration possibilities to be tested using, for example, RF waves or fixed frequency pulses.

Hard tags 40 that are successfully programmed are dispensed to the user, ready for attachment to a product. Hard tags 40 that do not encode properly are rejected via a gating mechanism 34 and are diverted to reject bin 36. In one embodiment, tester 24 has the ability to mark rejected hard tags 40 with a visual mark to prevent future use. Optionally, hard tag 40 can be dispensed in such a way that hard tag 40 can be automatically attached to a product or garment by using a separate feed mechanism (not shown) which orients and provides attachment tacks, lanyards or clamps required to attach the hard tag to a product. In another embodiment, tester 24 verifies proper operation of the EAS element in hard tag 40 and rejects hard tag 40 if the EAS function is not operating properly.

Programming system 28 includes bar code label applicator ("BCA") 38 that prints on the surface of hard tag 40 a visual indicator of the new code programmed in hard tag 40. BCA 38 may print the visual indicator of the new code in a label, and attach the printed label to hard tag 40, instead of printing the label on the hard tag. A visual indicator will give the user the ability to recognize which code has been used in programming hard tag 40.

In another embodiment, platform 18 is a stationary platform, and feeder 12, NFP antenna 16, BCA 38, and tester 24 are not stationary, but movable via a motor or motors, controlled, for example by processor 26, with respect to platform 18. NFP antenna 16 advances towards hard tag 40 to program hard tag 40 with a new EPC. After hard tag 40 is programmed, tester 24 proceeds towards hard tag 40 to perform testing on hard tag 40. If the testing is successful, BCA 38 advances towards hard tag 40 to mark hard tag 40 with a visual indicator of hard tag's 40 new code.

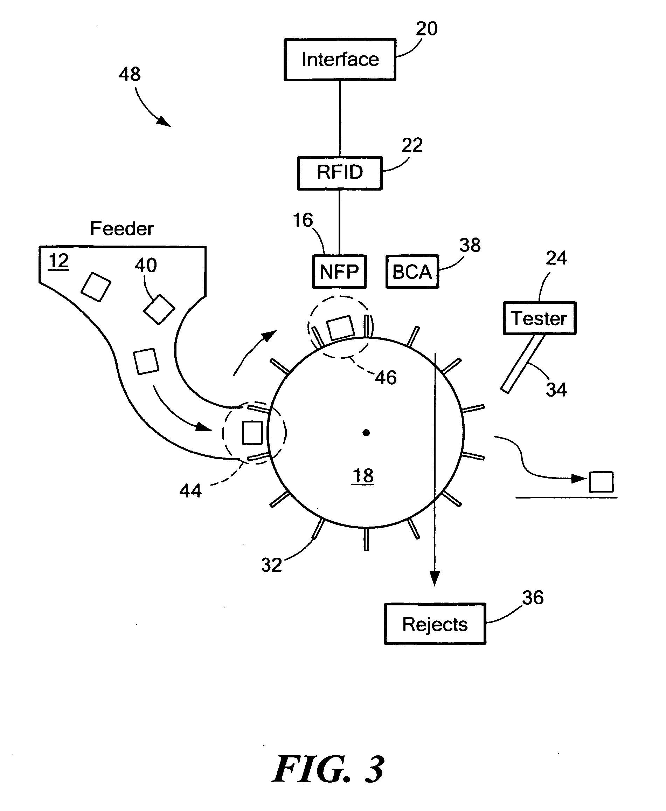

FIG. 3 illustrates another embodiment of programming system 10 constructed in accordance with the principles of the present invention. Exemplary programming system 48 includes a circular platform 18 defining at least one hard tag locating area 44, feeder 12 for feeding hard tag 40 into one of the at least one hard tag locating areas 44, NFP antenna 16 positioned at hard tag programming area 46, interface 20, RFID programming unit 22, tester 24, shielding system 32, gating mechanism 34, reject bin 36 and BCA 38.

NFP antenna 16 is positionable within hard tag programming area 46 where RFID processor 26 causes hard tag 40 to be programmed. Near field programming antenna 16 can be configured to wirelessly program hard tag 40. Hard tags 40, which include an EAS element, are programmed with, for example, an EPC code, or a merchandise identifier comprising at least one of a manufacturer code, a product serial number, and a tracking number.

Circular platform 18 is coupled to a vibratory mechanism (not shown) to properly orient hard tags 40 into the at least one hard tag locating area 44. In another embodiment of a programming system constructed in accordance with the principles of the present invention, the NFP antenna 16 can be one of a stationary antenna or a movable antenna. RFID processor 26 causes the movable antenna to go to hard tag 40 for programming hard tag 40. Programming system 10 is coupled to tester 24 configured to determine whether hard tag 40 has been programmed correctly. An incorrectly programmed hard tag 40 is marked to prevent future use and it is rejected and diverted to reject bin 36. RFID processor 26 keeps track of a number of hard tags 40 programmed, a number of hard tags 40 programmed correctly, and a number of hard tags 40 programmed incorrectly.

Further, bar code label applicator 38 is configured to attach a bar code label to hard tags 40. Hard tags 40 are automatically attached to a product after being labeled and tested. Shielding system 32 divides the platform into hard tag locating areas 44. Shielding system 32 has a shielding property that prevents programming of other hard tags 40 adjacent to the hard tag being programmed. When tester 24 determines that hard tag 40 has been incorrectly programmed, hard tag 40 is marked to prevent future use and it is sent to reject bin 36. It should be noted that platform 18 illustrated in FIG. 3 is an exemplary circular platform, and that the invention disclosed herein is not limited to a particular design or type of platform 18.

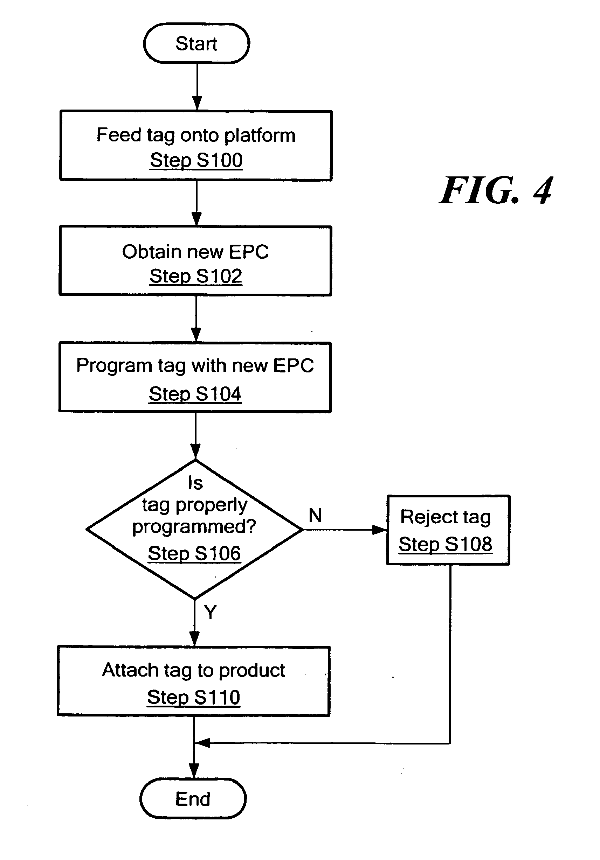

FIG. 4 is a flow chart 42 showing an exemplary method for programming hard tag 40. The programming process starts by having feeder 12 feed hard tag 40 into platform 18 (step S100). Hard tag 40 is positioned into hard tag programming area 46 of platform 18 to be programmed. The new EPC code that will be used to program hard tag 40 is obtained (step S 102). The new EPC code can be obtained from RFID programming unit 22, and can be used repeatedly to program other hard tags 40, or can be used only once for a specific hard tag 40. In one embodiment the programming system 10 reads the existing old EPC code of each hard tag 40, and depending on what the existing old EPC code is, programming system 28 can program the hard tags 40 accordingly. The hard tag 40 is programmed with the new EPC code (step S104).

Tester 24 evaluates hard tag 40 to determine whether tag 40 has been properly programmed (step S 106). Hard tag programming area 46 includes shielding system 32 that ensures programming system 10 programs only the target hard tag 40 and no any other adjacent tags. If hard tag 40 has not been properly programmed, hard tag 40 is rejected (step S 108). A rejected tag is sent by gating mechanism 34 to reject bin 36, where it can be later recycled, thrown away, etc. Programming system 10 sounds an alarm to alert operators that hard tag 40 has been rejected. Otherwise, it is determined that hard tag 40 is properly programmed, and therefore hard tag 40 is ready to be attached to a product (step S 110). In one embodiment, BCA 38 labels hard tag 40 with a human readable indicator before hard tag 40 is attached to merchandise.

Various hard tag 40 programming embodiments are described in terms of this exemplary tag programming system 10. After reading this description, it will become apparent to a person of ordinary skill in the relevant art(s) how to implement the invention using other systems and methods. It is also understood that the capacities and quantities of the components of the system and method described may vary depending on the tag, the quantity of tags to be supported, as well as the intended interaction between programming components with the tag. For example, access to the programming system for configuration and management may be designed to occur remotely by web browser. In such case, the inclusion of a display interface may not be required.

The present invention can be realized in hardware, software, or a combination of hardware and software. Any kind of computing system, or other apparatus adapted for carrying out the methods described herein, is suited to perform the functions described herein.

A typical combination of hardware and software could be a specialized or general purpose computer system having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or nonvolatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

In addition, unless mention was made above to the contrary, it should be noted that all of the accompanying drawings are not to scale. Significantly, this invention can be embodied in other specific forms without departing from the essential attributes thereof, and accordingly, reference should be had to the following claims, rather than to the foregoing specification, as indicating the scope of the invention.

## Claims

1. A system (10) for programming a hard tag (40), the hard tag (40) including an EAS element and a programmable RFID element, the system comprising:
a platform (18) defining at least one hard tag locating area (44);
a feeder (12) for feeding the hard tag (40) into one of the at least one hard tag locating areas (44);
an antenna (16) positioned at a hard tag programming area (46), each of the at least one hard tag locating areas (44) being positionable within the hard tag programming area (46); and
a RFID processor causing the hard tag (40) to be programmed by the antenna (16) when the hard tag (40) is positioned within the hard tag programming area (46),
**characterized by**
shields (32) on the platform (18) to divide the platform (18) into hard tag locating areas (44), the shields(32) having a shielding property that prevents programming of other hard tags (40) adjacent to the hard tag (40) being programmed.

2. The system of Claim 1, wherein the antenna (16) is a near field programming antenna configured to wirelessly program the hard tag (40).

3. The system of Claim 1, wherein the hard tag is programmed with an EPC code.

4. The system of Claim 1, wherein the platform (18) is coupled to a vibratory mechanism to properly orient the hard tag (40) into the at least one hard tag locating area (44).

5. The system of Claim 1, wherein the antenna is one of a stationary antenna and a movable antenna, wherein the RFID processor causes the movable antenna to go to at least one hard tag locating area (44).

6. The system of Claim 1, wherein the system is coupled to a tester (24) configured to determine whether the hard tag (40) has been programmed correctly.

7. The system of Claim 1, further comprising a reject bin (36) positioned along the platform (18), wherein an incorrectly programmed hard tag (40) is rejected and diverted to the reject bin (36).

8. The system of Claim 1, wherein the RFID processor keeps track of a number of hard tags (40) programmed, a number of hard tags (40) programmed correctly, and a number of hard tags (40) programmed incorrectly.

9. The system of Claim 1, further comprising a bar code label applicator configured to attach a bar code label to the hard tag (40).

10. The system of Claim 7, wherein the incorrectly programmed hard tag (40) is marked to prevent future use.

11. The system of Claim 1, wherein the platform (18) is a circular platform.

12. A method for programming a hard tag (40), the hard tag (40) including a programmable RFID element, the method comprising:
receiving the hard tag (40) into at least one hard tag locating area (44) of a platform (18);
positioning each of the at least one hard tag locating areas (44) within a hard tag programming area (46), the hard tag programming area (46) comprising an antenna (16); and
programming the hard tag (40) with a merchandise identifier when the hard tag (40) is positioned within the hard tag programming area (46)
**characterized in that**
the platform (18) is divided into hard tag locating areas (44) by shields (32) on the platform (18), the shields (32) having a shielding property preventing programming of other hard tags (40) adjacent to the hard tag (40) being programmed.

13. The method of Claim 12, wherein the merchandise identifier comprises at least one of a manufacturer code, a product serial number, and a tracking number.

14. The method of Claim 12, further comprising attaching a bar code label to the hard tag with a bar code label applicator.

15. The method of Claim 12, wherein the merchandise identifier is an EPC code.

16. The method of Claim 12, further comprising orienting the hard tag (40) using a vibratory mechanism coupled to the platform (18) to properly orient the hard tag (40) into the at least one hard tag locating area (44).

17. The method of Claim 12, further comprising advancing each hard tag locating area (44) to the hard tag programming area (46).

## Patentansprüche

1. System (10) zum Programmieren eines harten Anhängers (40), wobei der harte Anhänger (40) ein EAS-Element und ein programmierbares RFID-Element enthält, wobei das System Folgendes umfasst:
eine Plattform (18), die wenigstens einen Bereich (44) zum Anordnen des harten Anhängers definiert;
eine Zufuhreinrichtung (12) zum Zuführen des harten Anhängers (40) in einen des wenigstens einen Bereichs (44) zum Anordnen des harten Anhängers;
eine Antenne (16), die in einem Bereich (46) zum Programmieren des harten Anhängers positioniert ist, wobei jeder des wenigstens einen Bereichs (44) zum Anordnen des harten Anhängers in dem Bereich (46) zum Programmieren des harten Anhängers positioniert werden kann; und
einen RFID-Prozessor, der bewirkt, dass der harte Anhänger (40) durch die Antenne (16) programmiert wird, wenn der harte Anhänger (40) in dem Bereich (46) zum Programmieren des harten Anhängers positioniert ist,
**gekennzeichnet durch**
Abschirmungen (32) auf der Plattform (18), um die Plattform (18) in Bereiche (44) zum Anordnen des harten Anhängers zu unterteilen, wobei die Abschirmungen (32) eine Abschirmungseigenschaft haben, die ein Programmieren anderer harter Anhänger (40) in der Nähe des momentan programmierten harten Anhängers (40) verhindert.

2. System nach Anspruch 1, wobei die Antenne (16) eine Nahfeld-Programmierungsantenne ist, die konfiguriert ist, das harte Anhänger (40) drahtlos zu programmieren.

3. System nach Anspruch 1, wobei der harte Anhänger mit einem EPC-Code programmiert ist.

4. System nach Anspruch 1, wobei die Plattform (18) mit einem Vibrationsmechanismus gekoppelt ist, um den harten Anhänger (40) in dem wenigstens einen Bereich (44) zum Anordnen des harten Anhängers geeignet zu orientieren.

5. System nach Anspruch 1, wobei die Antenne eine stationäre Antenne oder eine bewegliche Antenne ist, wobei der RFID-Prozessor die bewegliche Antenne veranlasst, sich in wenigstens einen Bereich (44) zum Anordnen des harten Anhängers zu begeben.

6. System nach Anspruch 1, wobei das System mit einer Testeinrichtung (24) gekoppelt ist, die konfiguriert ist, zu bestimmen, ob der harte Anhänger (40) korrekt programmiert worden ist.

7. System nach Anspruch 1, das ferner einen Zurückweisungsbehälter (36) umfasst, der längs der Plattform (18) positioniert ist, wobei ein nicht korrekt programmierter harter Anhänger (40) zurückgewiesen und in den Zurückweisungsbehälter (36) abgezweigt wird.

8. System nach Anspruch 1, wobei der RFID-Prozessor eine Anzahl programmierter harter Anhänger (40), eine Anzahl korrekt programmierter harter Anhänger (40) und eine Anzahl nicht korrekt programmierter harter Anhänger (40) verfolgt.

9. System nach Anspruch 1, das ferner eine Strichcodeetikett-Aufbringeinrichtung umfasst, die konfiguriert ist, ein Strichcodeetikett an dem harten Anhänger (40) zu befestigen.

10. System nach Anspruch 7, wobei der nicht korrekt programmierte harte Anhänger (40) markiert wird, um seine künftige Verwendung zu verhindern.

11. System nach Anspruch 1, wobei die Plattform (18) eine kreisförmige Plattform ist.

12. Verfahren zum Programmieren eines harten Anhängers (40), wobei der harte Anhänger (40) ein programmierbares RFID-Element enthält, wobei das Verfahren Folgendes umfasst:
Empfangen des harten Anhängers (40) in wenigstens einem Bereich (44) zum Anordnen des harten Anhängers einer Plattform (18);
Positionieren jedes des wenigstens einen Bereichs (44) zum Anordnen des harten Anhängers in einem Bereich (46) zum Programmieren des harten Anhängers, wobei der Bereich (46) zum Programmieren des harten Anhängers eine Antenne (16) enthält; und
Programmieren des harten Anhängers (40) mit einer Warenkennung, wenn der harte Anhänger (40) in dem Bereich (46) zum Programmieren des harten Anhängers positioniert ist,
**dadurch gekennzeichnet, dass**
die Plattform (18) durch Abschirmungen (32) in Bereiche (44) zum Anordnen des harten Anhängers unterteilt wird und
auf der Plattform (18) die Abschirmungen (32) eine Abschirmungseigenschaft haben, um ein Programmieren anderer harter Anhänger (40) in der Nähe des momentan programmierten harten Anhängers (40) zu verhindern.

13. Verfahren nach Anspruch 12, wobei die Warenkennung wenigstens einen Herstellercode, eine Produktseriennummer und eine Verfolgungsnummer umfasst.

14. Verfahren nach Anspruch 12, das ferner das Befestigen eines Strichcodeetiketts an dem harten Anhänger mit einer Strichcodeetikett-Aufbringeinrichtung umfasst.

15. Verfahren nach Anspruch 12, wobei die Warenkennung ein EPC-Code ist.

16. Verfahren nach Anspruch 12, das ferner das Orientieren des harten Anhängers (40) unter Verwendung eines Vibrationsmechanismus, der mit der Plattform (18) gekoppelt ist, umfasst, um den harten Anhänger (40) in dem Bereich (44) zum Anordnen des harten Anhängers geeignet zu orientieren.

17. Verfahren nach Anspruch 12, das ferner das Vorwärtsbewegen jedes Bereichs (44) zum Anordnen des harten Anhängers in den Bereich (46) zum Programmieren des harten Anhängers umfasst.

## Revendications

1. Système (10) pour programmer une étiquette rigide (40), l'étiquette rigide (40) comprenant un élément EAS et un élément RFID programmable, le système comprenant :
une plateforme (18) définissant au moins une zone d'emplacement d'étiquette rigide (44) ;
un système d'alimentation (12) pour alimenter l'étiquette rigide (40) dans une de l'au moins une zone d'emplacement d'étiquette rigide (44) ;
une antenne (16) positionnée au niveau d'une zone de programmation d'étiquette rigide (46), chacune de l'au moins une zone d'emplacement d'étiquette rigide (44) étant positionnable à l'intérieur de la zone de programmation de l'étiquette rigide (46) ; et
un processeur RFID amenant l'étiquette rigide (40) à être programmée par l'antenne (16) lorsque l'étiquette rigide (40) est positionnée à l'intérieur de la zone de programmation de l'étiquette rigide (46),
**caractérisé par** :
des blindages (32) sur la plateforme (18) pour diviser la plateforme (18) en zone d'emplacement d'étiquette rigide (44), les blindages (32) ayant une propriété de blindage qui permet d'éviter une programmation d'autres étiquettes rigides (40) adjacentes à l'étiquette rigide (40) en cours de programmation.

2. Système selon la revendication 1, dans lequel l'antenne (16) est une antenne de programmation en champ proche configurée pour programmer sans fil l'étiquette rigide (40).

3. Système selon la revendication 1, dans lequel l'étiquette rigide est programmée avec un code EPC.

4. Système selon la revendication 1, dans lequel la plateforme (18) est couplée à un mécanisme vibratoire pour orienter correctement l'étiquette rigide (40) dans l'au moins une zone d'emplacement d'étiquette rigide (44).

5. Système selon la revendication 1, dans lequel l'antenne est une antenne parmi une antenne stationnaire et une antenne mobile, où le processeur RFID amène l'antenne mobile à aller vers au moins une zone d'emplacement d'étiquette rigide (44).

6. Système selon la revendication 1, dans lequel le système est couplé à un testeur (24) configuré pour déterminer si l'étiquette rigide (40) a été programmée correctement.

7. Système selon la revendication 1, comprenant en outre un réceptacle à rebuts (36) positionné le long de la plateforme (18), dans lequel une étiquette rigide (40) programmée de manière incorrecte est rejetée et déviée vers le réceptacle à rebuts (36).

8. Système selon la revendication 1, dans lequel le processeur RFID conserve la trace d'un nombre d'étiquettes rigides (40) programmées, d'un nombre d'étiquettes rigides (40) programmées correctement, et d'un nombre d'étiquettes rigides (40) programmées de manière incorrecte.

9. Système selon la revendication 1, comprenant en outre un applicateur d'étiquette code à barres pour fixer une étiquette code à barres à l'étiquette rigide (40).

10. Système selon la revendication 7, dans lequel l'étiquette rigide (40) programmée de manière incorrecte est marquée pour empêcher toute utilisation ultérieure.

11. Système selon la revendication 1, dans lequel la plateforme (18) est une plateforme circulaire.

12. Procédé pour programmer une étiquette rigide (40), l'étiquette rigide (40) comprenant un élément RFID programmable, le procédé comprenant les étapes suivantes :
recevoir l'étiquette rigide (40) dans au moins une zone d'emplacement d'étiquette rigide (44) d'une plateforme (18) ;
positionner chacune des au moins une zone d'emplacement (44) à l'intérieur d'une zone de programmation d'étiquette rigide (46), la zone de programmation d'étiquette rigide (46) comprenant une antenne (16) ; et
programmer l'étiquette rigide (40) avec un identifiant de marchandise lorsque l'étiquette rigide (40) est positionnée à l'intérieur de la zone de programmation d'étiquette rigide (46),
**caractérisé en ce que** :
la plateforme (18) est divisée en zones d'emplacement d'étiquette rigide (44) par des blindages (32) sur la plateforme (18), les blindages (32) ayant une propriété de blindage permettant d'éviter une programmation d'autres étiquettes rigides (40) adjacentes à l'étiquette rigide (40) en cours de programmation.

13. Procédé selon la revendication 12, dans lequel l'identifiant de marchandise comprend au moins un des éléments parmi un code constructeur, un numéro de série de produit, et un numéro de suivi.

14. Procédé selon la revendication 12, comprenant en outre de fixer une étiquette code à barres à l'étiquette rigide avec un applicateur d'étiquette code barres.

15. Procédé selon la revendication 12, dans lequel l'identifiant de marchandise est un code EPC.

16. Procédé selon la revendication 12, comprenant en outre d'orienter l'étiquette rigide (40) au moyen d'un mécanisme vibratoire couplé à la plateforme (18) pour orienter correctement l'étiquette rigide (40) dans l'au moins une zone d'emplacement d'étiquette rigide (44).

17. Procédé selon la revendication 12, comprenant en outre d'avancer chaque zone d'emplacement d'étiquette rigide (44) vers la zone de programmation d'étiquette rigide (46).
